(19) Europäisches Patentamt
European Patent Office
Office européen des brevets

(11) EP 2 105 468 A1

(12) **EUROPEAN PATENT APPLICATION**

(43) Date of publication:
**30.09.2009 Bulletin 2009/40**

(21) Application number: **09004488.4**

(22) Date of filing: **27.03.2009**

(51) Int Cl.:
***C09B 67/10*** *(2006.01)* ***C09B 67/20*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.03.2008 JP 2008084862**

(71) Applicant: **FUJIFILM Corporation**
**Minato-ku**
**Tokyo 106-8620 (JP)**

(72) Inventor: **Kyota, Hirokazu**
**Ashigarakami-gun**
**Kanagawa 258-8577 (JP)**

(74) Representative: **HOFFMANN EITLE**
**Patent- und Rechtsanwälte**
**Arabellastrasse 4**
**81925 München (DE)**

(54) **Method of producing an organic pigment fine particle dispersion, and ink-jet recording ink and paint using the organic pigment fine particle obtained by the same**

(57) A method of producing an organic pigment fine particle dispersion, including feeding at least three liquids, which are a solution containing an organic pigment dissolved in an organic solvent in the presence of an alkali, a solution containing a dispersant, and an aqueous medium, into separate channels and bringing the at least three liquids into junction with each other in a channel simultaneously to produce fine particles of the organic pigment.



Printed by Jouve, 75001 PARIS (FR)

## Description

### FIELD OF THE INVENTION

The present invention relates to a method of producing an organic pigment fine particle dispersion and to an ink-jet recording ink and a paint each using the organic pigment fine particle obtained by the same.

### BACKGROUND OF THE INVENTION

Pigments generally exhibit vivid color tone and high coloring power, and they are widely used in many fields. Examples of use applications in which pigments are used include paints, printing inks, electrophotographic toners, ink-jet inks, and color filters. Among them, applications of particularly practical importance that require high performance include color filters and ink-jet inks.

In recent years, reduction in color filter thickness has been strongly required for achieving an increase in pixel count of apparatus associated with imaging, such as liquid crystal displays, CCD sensors or digital cameras. To reduce in color filter thickness, it is essential that finer pigments be used in the color filters. In addition, development of pigment fine particles with uniformity and minuteness is required for ensuring higher contrast in color filters. In other words, development of pigment fine particles with minuteness, uniformity and stability holds the key to achieving high performance of apparatus associated with imaging.

On the other hand, dyes have been so far used as coloring materials of ink-jet inks. However, dyes are inferior in water resistance and light stability. So, pigments have come to be used for improvements in ink-jet ink properties. And it is being tried to apply ink-jet technology to not only a printing purpose but also production of a wide variety of precision members. For example, ink-jet technology is expected as a technology for production of precision members, most notably color filters, which substitutes for traditional technologies including lithography and allows enhancement of design flexibility and significant increase in productivity. However, neither pigment fine particles suitable for such a technology and fully adaptable to those requirements nor ink-jet inks containing such pigment fine particles are present yet.

From this background, pigments are required to be fined down so as to have particle diameters on the order of, for example, several tens of nanometers, and to be undergone such particle-diameter control that the distribution of their particle diameters approaches a monodisperse distribution. However, it is difficult to obtain such pigments by use of a general breakdown method (crushing method). This is because such a method requires great amounts of time and energy for crushing down pigments to nanometer-size particles, so it has low productivity, and besides, it limits pigments usable therein. In addition, it is known that, when too high energy is applied in the crushing method, an adverse effect referred to as overdispersion, such as a thickening phenomenon by re-aggregation, is caused.

In contrast, developed as a non-pulverization method was a method of obtaining a fine particle dispersion by dissolving a crude product of organic pigment in an organic solvent with an alkali and mixing the solution with water in a tank such as flask in the presence of a dispersant or surfactant (see JP-A-61-255964 ("JP-A" means unexamined published Japanese patent application), JP-A-2003-113341 and JP-A-2004-43776). It is possible by the method to control the particle diameter during preparation of particles and thus to obtain a dispersion of pigment fine particles without crushing operation. Additionally developed was a method of producing a pigment dispersion by adding a polymerizable compound to at least one of an alkaline or acidic solution containing a dissolved organic pigment and an aqueous medium, mixing both of them for precipitation of the pigment fine particles, and polymerizing the polymerizable compound, in a microreactor. It is reported that a dispersion containing particles smaller in diameter and superior in monodispersion was obtained in this way (JP-A-2007-39643).

However, all in the JP-A-61-255964, JP-A-2003-113341, JP-A-2004-43776 and JP-A-2007-39643, a dispersant or the like is added to the organic solvent solution containing the dissolved organic pigment or the aqueous medium. As a result, it is not possible to select the solvent for solubilization of the dispersant arbitrarily. Thus, because the solvent is selected, taking the solubility of the organic pigment and the precipitation of the fine particles into consideration, it is not always the kind of solvent preferable for solubilization of the dispersant. For example, if an organic pigment solution is prepared in the presence of an alkali, it is difficult to use a dispersant fragile to alkali, such as a compound having an ester group. In particular, under the condition where a strong base such as metal hydroxide and metal alkoxide is used as the alkali, the dispersant may be decomposed and degenerated. On the other hand, if the dispersant is used as dissolved in an aqueous medium, normally dispersants usable are limited to those soluble in water. In addition, it is a method of precipitating the pigment fine particles from the state where the pigment and the dispersant are not co-present, and mixing the precipitate in contact with a dispersant in aqueous medium, and thus, it may be a method disadvantageous in principle in adding the dispersion. As a result, processing by the method occasionally resulted in uncontrolled growth of the particle diameter or demanded for a dispersant in larger amount.

Also known is a method of producing organic particles by mixing at least three solutions, a solution of an organic material dissolved in good solvent, a solvent compatible with the good solvent but not compatible with the organic

material, and a solution containing a polymer dispersant, simultaneously or sequentially and generating particles of the organic material in the liquid mixture (see WO2007/013599). However, the liquid mixing is mixing performed in a tank by agitation, and precise control of the fine particles precipitation condition is difficult.

Separately disclosed is an acid pasting processing method by forming a three-layered laminar flow by means of feeding a fluid containing an alkaline solution and a fluid containing a pigment and an acid dissolving the pigment, and feeding a fluid allowing precipitation of the pigment between the two fluids, to recrystalize the pigment (see JP-A-2005-206666). However, the invention is a method of feeding water as the intermediate layer for relaxation of the heat generated during mixing of the pigment-dissolved acid with the alkali, and addition of a dispersant thereto is not mentioned in the patent application.

## SUMMARY OF THE INVENTION

The present invention resides in a method of producing an organic pigment fine particle dispersion, including feeding at least three liquids, which are a solution containing an organic pigment dissolved in an organic solvent in the presence of an alkali, a solution containing a dispersant, and an aqueous medium, into separate channels and bringing the at least three liquids into junction with each other in a channel simultaneously to produce fine particles of the organic pigment.

Further, the present invention resides in an ink-jet recording ink, including the organic pigment fine particles in an aqueous dispersion obtained by the production method as described above, the dispersant, and an ink medium.

Further, the present invention resides in a paint, including the organic pigment fine particles in an aqueous dispersion obtained by the production method as described above, the dispersant, and a vehicle.

Other and further features and advantages of the invention will appear more fully from the following description, appropriately referring to the accompanying drawings.

## BRIEF DESCRIPTION OF THE DRAWINGS

Fig. 1 is a schematic view illustrating the system configuration of an embodiment of a producing device favorably used in a production method according to the present invention; and

Fig. 2 is an explanatory drawing illustrating the conceptual state of multiple fluids being joined in a microreactor of the device shown in Fig. 1.

## DETAILED DESCRIPTION OF THE INVENTION

According to the present invention, there are provided the following means:

(1) A method of producing an organic pigment fine particle dispersion, including feeding at least three liquids, which are a solution containing an organic pigment dissolved in an organic solvent in the presence of an alkali, a solution containing a dispersant, and an aqueous medium, into separate channels and bringing the at least three liquids into junction with each other in a channel simultaneously to produce fine particles of the organic pigment.

(2) The production method according to the item (1), wherein the solution containing the dispersant is a solution of the dispersant dissolved in a medium containing an organic solvent as the main component.

(3) The production method according to the item (1) or (2), wherein the laminar flow is formed after simultaneous junction of the at least three liquids, while the solution containing the dispersant is supplied between the streams of the organic pigment solution and the aqueous medium.

(4) The production method according to any one of the items (1) to (3), wherein the mass of the dispersant in the dispersion is adjusted to 0.5 times or less of the mass of the organic pigment.

(5) The production method according to any one of the items (1) to (4), wherein the simultaneous junction of the at least three liquids occurs in a microreactor apparatus containing channel units having an equivalent diameter of 2 mm or less.

(6) The production method according to any one of the items (1) to (5), wherein the equivalent diameter of the channel in the region of the simultaneous junction of the at least three liquids or the downstream thereof is 2 mm or less.

(7) The production method according to any one of the items (1) to (6), wherein the dispersant used is one or more ester group-containing compounds.

(8) The production method according to any one of the items (1) to (7), wherein the dispersant used is one or more surfactants.

(9) The production method according to any one of the items (1) to (8), wherein the volume average particle diameter

(Mv) of the organic fine particles is from 10 nm to 50 nm.

(10) An ink-jet recording ink, including the organic pigment fine particles in an aqueous dispersion obtained by the production method according to any one of the items (1) to (9), the dispersant, and an ink medium.

(11) A paint, including the organic pigment fine particles in an aqueous dispersion obtained by the production method according to any one of the items (1) to (9), the dispersant, and a vehicle.

The present invention is further described below in detail.

The method of producing an organic pigment dispersion according to the present invention comprises a step of feeding at least three liquids, which are a solution of an organic pigment dissolved with an alkali (hereinafter, referred to as "pigment solution"), a solution containing a dispersant (hereinafter, referred to as "dispersant solution"), and an aqueous medium, into separate channels, and bringing the at least three liquids into junction with each other in a channel simultaneously. In this way, it is possible to generate fine particles of organic pigment immediately after contact of the at least three liquids with each other and to prepare a dispersion of the organic pigment fine particles having an extremely small particle diameter and a narrow particle diameter distribution efficiently and at high purity. The phrase "simultaneous junction of multiple liquids", as used in the present invention, means that the liquids stored in separate spaces are fed into the same space without any barrier within a period of 0.5 seconds or less.

The number-average diameter of the organic pigment fine particles obtained by the production method according to the present invention is preferably 100 nm or less, more preferably 70 nm or less, and particularly preferably 10 nm or more and 50 nm or less. As to the monodispersibility, a value (Mv/Mn) obtained by dividing a volume average particle diameter (Mv) by a number average particle diameter (Mn) may be expressed as an index. The value Mv/Mn is preferably 1.8 or less, and more preferably 1.5 or less, and particularly preferably 1.20 or more and 1.40 or less.

The term "dispersion" as used in the present invention refers to a composition prepared by dispersing given fine particles into a medium, and the composition has no particular restriction on its state. So, it is intended to include a liquid composition (dispersion liquid), a paste composition and a solid composition.

In the organic pigment fine particle dispersion produced by the production method of the present invention, the content of organic pigment fine particles, though not particularly limited, is preferably from 0.1 to 50 % by mass, more preferably from 0.5 to 25 % by mass.

The organic pigment for use in the production method according to the present invention are not particularly limited and may be a magenta pigment, a yellow pigment or a cyan pigment. Typical examples thereof include magenta pigments, yellow pigments, and cyan pigments, such as of perylene organic pigments, perynone organic pigments, quinacridone organic pigments, quinacridonequinone organic pigments, anthraquinone organic pigments, anthanthrone organic pigments, benzimidazolone organic pigments, condensed disazo organic pigments, disazo organic pigments, azo organic pigments, indanthron organic pigments, phthalocyanine organic pigments, triaryl carbonium organic pigments, dioxazine organic pigments, aminoanthraquinone organic pigments, diketopyrrolopyrrole organic pigments, thioindigo organic pigments, isoindoline organic pigments, isoindolinone organic pigments, pyranthrone organic pigments, and isoviolanthrone organic pigment, and the mixture thereof.

More specifically, examples of the organic pigment include perylene organic pigments such as C.I. Pigment Red 190 (C.I. No. 71140), C.I. Pigment Red 224 (C.I. No. 71127), and C.I. Pigment Violet 29 (C.I. No. 71129); perynone organic pigments such as C.I. Pigment Orange 43 (C.I. No. 71105), and C.I. Pigment Red 194 (C.I. No. 71100); quinacridone organic pigments such as C.I. Pigment Violet 19 (C.I. No. 73900), C.I. Pigment Violet 42, C.I. Pigment Red 122 (C.I. No. 73915), C.I. Pigment Red 192, C.I. Pigment Red 202 (C.I. No. 73907), C.I. Pigment Red 207 (C.I. Nos. 73900 and 73906), and C.I. Pigment Red 209 (C.I. No. 73905); quinacridonequinone organic pigments such as C.I. Pigment Red 206 (C.I. No. 73900/73920), C.I. Pigment Orange 48 (C.I. No. 73900/73920), and C.I. Pigment Orange 49 (C.I. No. 73900/73920); anthraquinone organic pigments such as C.I. Pigment Yellow 147 (C.I. No. 60645); anthanthrone organic pigments such as C.I. Pigment Red 168 (C.I. No. 59300); benzimidazolone organic pigments such as C.I. Pigment Brown 25 (C.I. No. 12510), C.I. Pigment Violet 32 (C.I. No. 12517), C.I. Pigment Yellow 180 (C.I. No. 21290), C.I. Pigment Yellow 181 (C.I. No. 11777), C.I. Pigment Orange 62 (C.I. No. 11775), and C.I. Pigment Red 185 (C.I. No. 12516); condensed disazo organic pigments such as C.I. Pigment Yellow 93 (C.I. No. 20710), C.I. Pigment Yellow 94 (C.I. No. 20038), C.I. Pigment Yellow 95 (C.I. No. 20034), C.I. Pigment Yellow 128 (C.I. No. 20037), C.I. Pigment Yellow 166 (C.I. No. 20035), C.I. Pigment Orange 34 (C.I. No. 21115), C.I. Pigment Orange 13 (C.I. No. 21110), C.I. Pigment Orange 31 (C.I. No. 20050), C.I. Pigment Red 144 (C.I. No. 20735), C.I. Pigment Red 166 (C.I. No. 20730), C.I. Pigment Red 220 (C.I. No. 20055), C.I. Pigment Red 221 (C.I. No. 20065), C.I. Pigment Red 242 (C.I. No. 20067), C.I. Pigment Red 248, C.I. Pigment Red 262, and C.I. Pigment Brown 23 (C.I. No. 20060); disazo organic pigments such as C.I. Pigment Yellow 13 (C.I. No. 21100), C.I. Pigment Yellow 83 (C.I. No. 21108), and C.I. Pigment Yellow 188 (C.I. No. 21094); azo organic pigments such as C.I. Pigment Red 187 (C.I. No. 12486), C.I. Pigment Red 170 (C.I. No. 12475), C.I. Pigment Yellow 74 (C.I. No. 11714), C.I. Pigment Red 48 (C.I. No. 15865), C.I. Pigment Red 53 (C.I. No. 15585), C.I. Pigment Orange 64 (C.I. No. 12760), and C.I. Pigment Red 247 (C.I. No. 15915); indanthrone organic pigments such as C.I. Pigment Blue 60 (C.I. No. 69800); phthalocyanine organic pigments such as C.I. Pigment Green 7 (C.I. No. 74260), C.I.

Pigment Green 36 (C.I. No. 74265), Pigment Green 37 (C.I. No. 74255), Pigment Blue 16 (C.I. No. 74100), C.I. Pigment Blue 75 (C.I. No. 74160:2), and 15 (C.I. No. 74160); triaryl carbonium organic pigments such as C.I. Pigment Blue 56 (C.I. No. 42800), and C.I. Pigment Blue 61 (C.I. No. 42765:1); dioxazine organic pigments such as C.I. Pigment Violet 23 (C.I. No. 51319), and C.I. Pigment Violet 37 (C.I. No. 51345); aminoanthraquinone organic pigments such as C.I. Pigment Red 177 (C.I. No. 65300); diketopyrrolopyrrole organic pigments such as C.I. Pigment Red 254 (C.I. No. 56110), C.I. Pigment Red 255 (C.I. No. 561050), C.I. Pigment Red 264, C.I. Pigment Red 272 (C.I. No. 561150), C.I. Pigment Orange 71, and C.I. Pigment Orange 73; thioindigo organic pigments such as C.I. Pigment Red 88 (C.I. No. 73312); isoindoline organic pigments such as C.I. Pigment Yellow 139 (C.I. No. 56298), C.I. Pigment Orange 66 (C.I. No. 48210); isoindolinone organic pigments such as C.I. Pigment Yellow 109 (C.I. No. 56284), and C.I. Pigment Orange 61 (C.I. No. 11295); pyranthrone organic pigments such as C.I. Pigment Orange 40 (C.I. No. 59700), and C.I. Pigment Red 216 (C.I. No. 59710); and isoviolanthrone organic pigments such as C.I. Pigment Violet 31 (C.I. No. 60010).

Preferred pigments are quinacridone organic pigments, diketopyrrolopyrrole organic pigments, condensed disazo organic pigments, and phthalocyanine organic pigments, and particularly preferred pigments are quinacridone organic pigments, condensed disazo organic pigments, and phthalocyanine organic pigments.

In the method of producing an organic pigment dispersion according to the present invention, the organic pigment solution is preferably fed into the channel after the pigment is dissolved uniformly. Supply of a liquid containing pigment particles, solid alkalis and salts may give pigment fine particles larger in particle diameter and wider in particle distribution, possibly clogging the channel. In the present invention, the wording "homogeneously (or uniformly) dissolving" means a solution in which turbidity (muddiness) is hardly observed when the solution is observed under visible light. In the present invention, a solution obtained by filtration through a micro-filter having pores of 1 μm or less in diameter, or a solution which does not contain any substance remaining after the solution is filtrated through a filter having pores of 1 μm or less in diameter, is defined as a homogeneously (or uniformly) dissolved solution (or a homogeneous (or uniform) solution).

The organic solvent dissolving the organic pigment used in preparation of the organic pigment solution (hereinafter, the organic solvent used for dissolving the organic pigment will be referred to as "good solvent") is not particularly limited, and examples thereof include polyvalent alcohol compound solvents such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivative, glycerol and trimethylolpropane; polyvalent alcohol lower monoalkylether compound solvents such as ethylene glycol monomethyl (or ethyl) ether, diethylene glycol monomethyl (or ethyl) ether and triethylene glycol monoethyl (or butyl) ether; polyether compound solvents such as ethylene glycol dimethylether (monoglyme), diethylene glycol dimethylether (diglyme) and triethylene glycol dimethylether (triglyme); amide compound solvents such as dimethylformamide, dimethylacetamide, 2-pyrrolidone, N-methyl-2-pyrrolidone, 1,3-dimethyl-2-imidazolidinone, urea and tetramethyl urea; sulfur-containing compound solvents such as sulfolane, dimethylsulfoxide and 3-sulfolene; multifunctional compound solvents such as diacetone alcohol and diethanolamine; carboxylic acid compound solvents such as acetic acid, maleic acid, docosahexaenoic acid, trichloroacetic acid and trifluoroacetic acid; sulfonate compound solvents such as methanesulfonic acid and trifluorosulfonic acid; and the like. These solvents may be used as a mixture of two or more.

An amide compound solvent or a sulfur-containing compound solvent is preferable as the good solvent; a sulfur-containing compound solvent is more preferable; and dimethylsulfoxide (DMSO) is particularly preferable.

In the production method according to the present invention, an organic pigment is dissolved in an organic solvent (good solvent) in the presence of an alkali. Examples of the alkalis (bases) used then include inorganic bases such a sodium hydroxide, potassium hydroxide, calcium hydroxide and barium hydroxide; organic bases such as trialkylamines and diazabicycloundecene (DBU), and metal alkoxides (such as $NaOCH_3$ and $KOC_2H_5$) and the like, and preferable are inorganic bases.

The amount of the base to be used is not particularly limited, as long as the base in the amount can make the pigments be dissolved homogeneously. In the case of the inorganic base, the amount thereof is preferably from 1.0 to 30 mole equivalents, more preferably from 2.0 to 25 mole equivalents, and further preferably from 3.0 to 20 mole equivalents, to the pigments. In the case of the organic base, the amount thereof is preferably from 1.0 to 100 mole equivalents, more preferably from 1.0 to 30 mole equivalents, and further preferably from 1.0 to 10 mole equivalents, to the pigments. The concentration of the added base in pigment solution is also not particularly limited, but preferably 0.01 mole/L to 10 mole/L, more preferably 0.1 mole/L to 2 mole/L.

In the production method according to the present invention, the concentration of the organic pigment in pigment solution is not particularly limited, but preferably 0.5 to 20 mass%, more preferably 1.0 to 10 mass%.

As used in the present invention, the aqueous medium means pure water or a mixed solvent of water and a water-soluble organic solvent.

The organic solvent for aqueous medium is used preferably, for example, when water alone is not sufficient in dissolving the pigment or dispersant uniformly, when water alone is not sufficient to make the viscosity of solution low enough to flow through the channel, or when it is needed for generation of laminar flow. The aqueous medium may contain, for example, water-soluble inorganic salts, acids and alkalis. The pH is preferably 10 or less, more preferably

3 to 9, and particularly more preferably 6 to 8.

The dispersant may be contained in the pigment solution and aqueous medium, but preferably not in the pigment solution, because the pigment solution contains a strong base or the like, as described above. Alternatively, multiple dispersants or surfactants may be used in combination as needed according to the properties and requirements, for example by adding a dispersant or surfactant resistant even udder strong alkaline environment to the pigment solution and the other dispersant to the dispersant solution.

In the method of producing an organic pigment dispersion according to the present invention, a dispersant solution containing one or more dispersants is used. The kind of the dispersant is not particularly limited, and a polymer dispersant, a surfactant (anionic, cationic, or nonionic) or a pigment-based dispersant may be used as needed, and these dispersants may be used in combination. Among the dispersant above, one or more polymer dispersants or anionic surfactants are preferably used. The dispersing agent has functions of (1) adsorbing quickly to the surface of precipitated pigment and forming minute pigment particles and (2) preventing these particles from aggregating again. Dispersing agents to be used in dispersion of the pigment are described in detail in "Dispersion Stabilization of Pigment and Surface Treatment Technique/Evaluation" (published by Technical Information Institute Co., Ltd, on December 2001), pp.29-46.

Examples of the polymer dispersing agent, in particular include polyvinyl pyrrolidone, polyvinyl alcohol, polyvinyl methyl ether, polyethylene oxide, polyethylene glycol, polypropylene glycol, polyacrylamide, vinyl alcohol/vinyl acetate copolymer, partial-formal products of polyvinyl alcohol, partial-butyral products of polyvinyl alcohol, vinylpyrrolidone/vinyl acetate copolymer, polyethylene oxide/propylene oxide block copolymer, polyacrylates, polyvinyl sulfates, poly(4-vinylpyridine) salts, polyamides, polyallylamine salts, condensed naphthalenesulfonates, styrene/acrylate copolymers, styrene/methacrylate copolymers, acrylic ester/acrylate copolymers, acrylic ester/methacrylate copolymers, methacrylic ester/acrylate copolymers, methacrylic ester/methacrylate copolymers, styrene/itaconate copolymers, itaconic ester/itaconate copolymers, vinylnaphthalene/acrylate copolymers, vinylnaphthalene/methacrylate copolymers, vinylnaphthalene/itaconate copolymers, cellulose derivatives, and starch derivatives. Besides, natural polymers can be used, examples of which include alginates, gelatin, albumin, casein, arabic gum, tragacanth gum, and ligninsulfonates.

Particularly preferable polymer dispersants include acrylic ester/acrylate copolymers, acrylic ester/methacrylate copolymers, methacrylic ester/acrylate copolymers, and methacrylic ester/methacrylate copolymers.

Examples of the anionic surfactants include dialkyl sulfoscuccinates, N-acyl-N-alkyltaurine salts, fatty acid salts, alkylsulfate ester salts, alkylbenzenesulfonates, alkylnaphthalenesulfonates, alkylphosphate ester salts, formalin naphthalenesulfonate condensates, polyoxyethylene alkyl sulfate ester salts and the like.

Among them, dialkyl sulfoscuccinates having an ester structure (e.g., sodium di(2-ethylhexyl) sulfosuccinate) are particularly preferable. These anionic dispersants may be used alone or in combination of two or more thereof.

Examples of the cationic dispersing agent (cationic surfactant) include quaternary ammonium salts, alkoxylated polyamines, aliphatic amine polyglycol ethers, aliphatic amines, diamines and polyamines derived from aliphatic amine and aliphatic alcohol, imidazolines derived from aliphatic acid, and salts of cationic substances thereof. These cationic dispersing agents may be used alone or in combination of two or more thereof.

The amphoteric dispersing agent is a dispersing agent having, in the molecule thereof, an anionic group moiety which the anionic dispersing agent has in the molecule, and a cationic group moiety which the cationic dispersing agent has in the molecule.

Examples of the nonionic dispersing agents (nonionic surfactant) include polyoxyethylenealkyl ethers, polyoxyethylenealkylaryl ethers, polyoxyethylene fatty acid esters, sorbitan fatty acid esters, polyoxyethylenesorbitan fatty acid esters, polyoxyethylenealkylamines, and glycerin fatty acid esters. Among these, polyoxyethylenealkylaryl ethers are preferable. These nonionic dispersing agents may be used alone or in combination of two or more thereof.

The pigmentary dispersing agent is defined as a dispersing agent derived from an organic pigment as a parent material, and prepared by chemically modifying a structure of the parent material. Examples of the pigmentary dispersing agent include sugar-containing pigmentary dispersing agents, piperidyl-containing pigmentary dispersing agents, naphthalene- or perylene-derivative pigmentary dispersing agents, pigmentary dispersing agents having a functional group linked through a methylene group to a pigment parent structure, pigmentary dispersing agents (parent structure) chemically modified with a polymer, pigmentary dispersing agents having a sulfonic acid group, pigmentary dispersing agents having a sulfonamido group, pigmentary dispersing agents having an ether group, and pigmentary dispersing agents having a carboxylic acid group, carboxylic ester group or carboxamido group.

Preferably in the production method according to the present invention, one or more ester group-containing compounds are added to the dispersant solution as the dispersants. On the other hand, they are preferably not added to the pigment solution.

The solvent dissolving the dispersant in the dispersant solution is preferably a medium containing an organic solvent, more preferably a water-soluble organic solvent, as the main component. The organic solvent for the dispersant solution is not particularly limited, and examples thereof include dimethylsulfoxide, N,N-dimethylformamide, alcohols (preferably having 4 or less carbon atoms such as methanol and ethanol), acetone, and tetrahydrofuran. Further, dimethylsulfoxide and N,N-dimethylformamide are preferable among them.

Preferably in the production method according to the present invention, the dispersant solution does not contain an alkali. The concentration of the dispersant in the dispersion is not particularly limited, but the mass of the dispersant in the dispersion obtained in the production method according to the present invention is preferably 0.5 time or less, more preferably 0.1 to 0.5 time, with respect to the mass of the organic - pigment. The concentration of the dispersant in a typical dispersant solution may be, for example, 5 to 50 mass%.

In the present invention, the polymerizable compound may be polymerized in the dispersion into a polymer after preparation of the pigment fine particle dispersion. It may be possible by the method to coat the pigment fine particles uniformly by the polymer for improvement in dispersion stability and long-term storage stability. The polymerizable compound for use may be either water-soluble or hydrophobic. The polymerizable compound may be contained either in the pigment solution, the dispersant solution or the aqueous medium, and may be added after preparation of the pigment fine particles.

The method of obtaining the polymer in the dispersion is preferably radical polymerization of a compound having a carbon double bond (C=C). Typical examples of the polymerizable compounds include (meth)acrylic esters (e.g., methyl acrylate, ethyl acrylate, butyl acrylate and benzyl acrylate), vinyl aromatic monomers (e.g., styrene and o-methylstyrene), vinyl esters (e.g., vinyl acetate, vinyl propionate, vinylbenzoate, and the derivatives thereof), N-vinylamides (e.g., N-vinylpyrrolidone), (meth)acrylic amides, alkyl-substituted (meta)acrylamides, methacrylamides, N-substituted maleimides, vinyl ethers (e.g., vinylmethylether and vinylethylether), maleic anhydride, (meta)acrylonitrile, methylvinylketone, and the like. Among them N-vinylpyrrolidone, which gives polyvinylpyrrolidone effective as a polymer dispersant, is used particularly preferably. In addition, a polyfunctional polymerizable compound may be used for tight coverage of the particles by crosslinking, and typical examples thereof include ethylene glycol diacrylates, divinylbenzene, divinylethers and the like.

Among the polymerizable compounds, those having a hydrophilic or hydrophobic function separately in the molecule are called polymerizable surfactants, reactive surfactants, or reactive emulsifiers, and can be used preferably in the method of producing an organic pigment dispersion according to the present invention. Such a compound has, for example, an α,β-ethylenic unsaturated group such as vinyl group, allyl group, propenyl group or (meth)acryloyl group and a hydrophilic group, i.e., an ionically dissociable group such as sulfonic acid group or the salt thereof or an alkyleneoxy group. These compounds are used generally in emulsion polymerization, and are anionic or nonionic surfactants having at least one radically-polymerizable unsaturated bond in the molecule.

As the polymerizable compound in the present method for producing an organic fine particle dispersion, such polymerizable surfactants may be used alone, or as combinations of different ones, or in combination with polymerizable compounds other than themselves. Examples of a polymerizable surfactant preferably used in the present invention include various kinds of polymerizable surfactants available from Kao Corporation, Sanyo Chemical Industries, Ltd., DAI-ICHI KOGYO SEIYAKU CO., LTD., ADEKA CORPORATION, Nippon Nyukazai Co., Ltd., NOF CORPORATION, and the like, and more specifically, those recited in Biryushi Funtai no Saisentan Gijutsu (which might be literally translated "Leading-edge Technology of Fine Particles and Powder"), Chap. 1-3 entitled "Hanno Nyukazai wo Mochiiru Biryushi Sekkei" (which might be literally translated "Fine-Particle Design Using Reactive Emulsifier"), pp.23-31, CMC Publishing Co., Ltd. (2000), and the like.

Hereinafter, specific examples of the polymerizable surfactant usable in the production method of the present invention will be described. However, the present invention is not limited thereto.

[Compound 1] ADEKA REASOAP SE-10N, manufactured by ADEKA CORPORATION

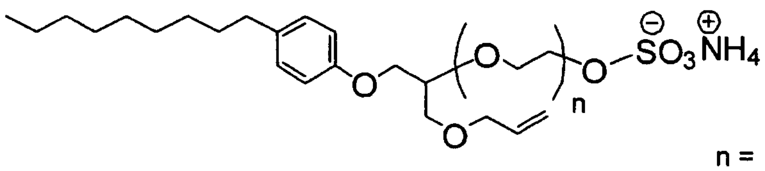

n = 10

[Compound 2] ADEKA REASOAP SR-10, manufactured by ADEKA CORPORATION

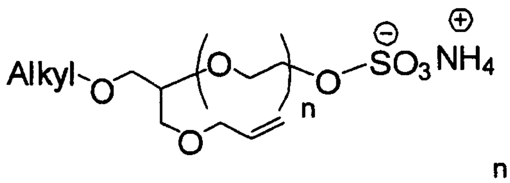

n = 10

[Compound 3] ADEKA REASOAP NE-40, manufactured by ADEKA CORPORATION

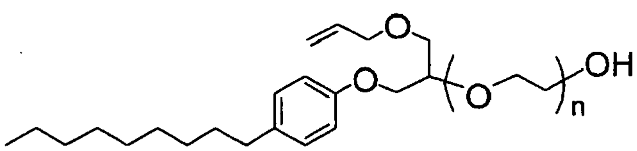

n = 40

[Compound 4] AQUALON HS-40, manufactured by DAI-ICHI KOGYO SEIYAKU CO., LTD.

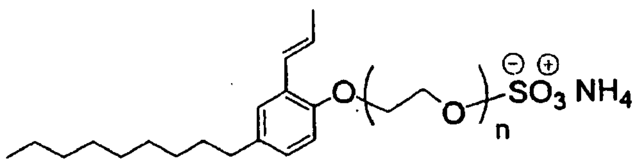

n = 40

[Compound 5] AQUALON KH-10, manufactured by DAI-ICHI KOGYO SEIYAKU CO., LTD.

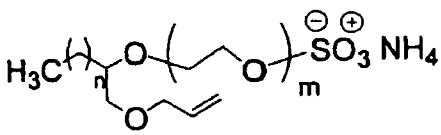

n=9 or 11

m = 10

The polymerization method of the polymerizable compound used in the method of producing an organic pigment fine particle dispersion of the present invention is not particularly limited, as long as it is capable of polymerizing a polymerizable compound in an organic pigment dispersion, and a method of polymerizing a polymerizable compound by generating a radical with a polymerization initiator is preferable. Although there are various factors for initiating polymerization, it is preferable to use heat, light, an ultrasonic wave, a microwave, or the like. As the polymerization initiator, a water-soluble or oil-soluble persulfate, peroxide, a compound having an azo group, or the like can be used, and a compound having an azo group is preferably used. Specific examples thereof include ammonium persulfate, potassium persulfate, sodium persulfate, hydrogen peroxide, t-butylhydroperoxide, 2,2'-azobisisobutylonitrile, 2,2'-azobis(2-amidinopropane) dihydrochloride, 2,2'-azobis(2-N-benzylamidinopropane) dihydrochloride, and 2,2'-azobis[2-N-(2-hydroxyethyl)amidinopropane] dihydrochloride. For example, the website (www.wako-chem.co.jp) of Wako Pure Chemical Industries, Ltd. describes various kinds of water-soluble azo polymerization initiator, oil-soluble azo polymerization initiator, and polymer azo polymerization initiator together with 10-hour half-life temperatures and the structural formulas thereof, which are available. Although the addition amount of the polymerization initiator is not particularly limited, it is preferably 0.1 to 30% by weight, more preferably 1 to 20% by weight, and most preferably 2 to 10% by weight with respect to the entire monomer components.

The time of the polymerization step is not particularly limited, and the reaction may be carried out at a time properly selected, for example, after preparation of the pigment fine particles in the channel, after collection of the dispersion or after purification or concentration thereof, but the method of performing polymerization in the channel is preferable, because the operation is simple and easy and the polymerization condition can be uniformized, easily giving a polymer for example having a uniform and stabilized molecular weight.

For further improvement of uniform dispersibility and temporal stability (storage stability) of the organic fine particles, the content of the polymerizable compound is preferably in the range of 0.1 to 1,000 parts by mass, more preferably in the range of 1 to 500 parts by mass, and particularly preferably in the range of 10 to 250 parts by mass, with respect to 100 parts by mass of the organic pigment. An excessively small amount may not lead to sufficient improvement in dispersion stability of the organic pigment fine particles after polymerization. If a dispersant is added to the polymerizable compound, the total amount of them is preferably in the range above.

Preferably, in the method of producing an organic pigment fine particle dispersion according to the present invention, a microreactor is used. The microreactor is a reactor having narrow channels having an equivalent diameter that form a micro-reaction field. In particular, a microreactor containing a channel having an equivalent diameter of 2 mm or less (preferably 80 μm or more and 1 mm or less) immediately downstream of the junction region is used preferably.

The equivalent diameter is a term also called a corresponding diameter, which is, in the present invention, used as a meaning generally mechanical engineering field. If a cylindrical tube equivalent to the tube (channel in the present invention) having any sectional shape is assumed, the diameter of the equivalent cylindrical tube corresponds to the equivalent diameter. The equivalent diameter ($d_{eq}$) is defined as $d_{eq} = 4A/p$ in which A is a sectional area of the tube, and p is a wetted perimeter length (circumferential length) of the tube. In the case of the cylindrical tube, this equivalent diameter corresponds to the diameter of the cylindrical tube.

When causing water to flow into a tube, inserting a narrow tube into the tube along the central axis thereof and then injecting a colored solution into the water, the colored solution flows in the form of a single line while the flow velocity of the water is small or slow. Thus, the water flows straightly and in parallel to the wall of the tube. However, when the flow velocity is raised to reach a given flow velocity, turbulence is suddenly caused in the water flow. Consequently, the colored solution is mixed with the water flow so that the whole of the solution and water becomes a colored flow. The former flow is called a laminar flow, and the latter flow is called a turbulent flow.

Whether a flow turns to a laminar flow or turbulent flow depends on whether or not the Reynolds number, which is a dimensionless number showing the state of the flow, is not more than a given critical value. As the Reynolds number is smaller, a laminar flow is more apt to be caused. The Reynolds number Re of the flow in a tube is represented by the following equation:

$$Re = D<\nu_x>\rho/\mu$$

wherein D represents the equivalent diameter of the tube, $<\nu_x>$ represents the sectional average velocity, $\rho$ represents the density of the flow, and $\mu$ represents the viscosity of the flow. As can be understood from this equation, the Reynolds number is smaller as the equivalent diameter is smaller. Therefore, in the case that the equivalent diameter is in the order of μm, a stable laminar flow is apt to be formed. In addition, the physical properties of the solution, such as the density and the viscosity thereof, also have influence on the Reynolds number. As the density is smaller and/or the viscosity is larger, the Reynolds number is smaller. It can be, therefore, understood that a laminar flow is apt to be formed in that case.

The Reynolds number representing such a critical value is called "critical Reynolds number". The critical Reynolds number is not necessarily definite. However, roughly, the following values can be criteria:

| | |
|---|---|
| $Re<2,300$ | laminar flow; |
| $Re>3,000$ | turbulent flow; and |
| $3,000>Re>2,300$ | transition state. |

The kind and shape of the reactor for use in the present invention is not particularly limited, any apparatus allowing simultaneous junction of at least three liquids can be used as the reactor. Hereinafter, an embodiment of the production apparatus (microreactor) preferably used in the production method according to the present invention will be described.

The reactor 5 shown in Fig. 1 has a first channel L1 allowing supply of a fluid 1a (first fluid), a channel L2 allowing supply of a fluid 2a (second fluid), and a channel L3 allowing supply of a fluid 3a (third fluid) connected to the terminals of the channels L1 and L2 in the microreactor 5. It is possible to supply the fluids 1a, 2a and 3a in laminar flow after junction, by properly selecting the flow rates and the flow rate ratio. The upstream-sided terminal of channel L1 is connected via a tube K1 to a microsyringe 1 containing the fluid 1a; the upstream-sided terminal of channel L2 is connected via a tube K2 to a microsyringe 2 containing the fluid 2a; and the upstream-sided terminal of channel L3 is connected via a tube K3 to a microsyringe 3 containing the fluid 3a. The fluid 1a in the microsyringe 1, the fluid 2a in the microsyringe 2, and the fluid 3a in the microsyringe 3 are fed respectively by feed pumps P1, P2, and P3 into the channels L1, L2 and L3 in the microreactor 5, and joined in a channel L4 (see Fig. 2).

The channels L1, L2, L3 and L4 in the microreactor 5 can be formed in a solid substrate by microfabrication method. The material used for the substrate is, for example, glass, ceramics, silicon or the like. Alternatively, a plastic resin may be used, if it is resistant to acid and alkali.

Examples of the microfabrication techniques of forming the channel L1, L2, L3 and L4 include methods by using LIGA technique and X-ray, photolithographic methods of using a resist region as a structure, methods of forming resist openings by etching, micro electric discharge machining methods, laser processing methods, and mechanical microgrinding processing methods of using a microtool of a hard material such as diamond. These techniques may be used alone or in combination thereof.

The bonding methods used in assembly of the microreactor 5 can be divided grossly into solid-phase and liquid-phase bonding methods. Solid-phase bonding methods include anodic bonding, direct bonding, diffusion bonding, and the like. Alternatively, liquid-phase bonding methods include fusion welding, adhesive agent bonding, and the like.

The microreactor 5 in the present embodiment has a heater 7 installed therein, and the temperature is regulated by a temperature-controlling device (not shown in the figure). The heater 7 for use is, for example, a metal resistance material, polysilicon or the like, and the heater 7 may be formed in the device. The entire device may be placed in a temperature-controlled container for temperature control.

Preferably in the production method according to the present invention, the above pigment solution and the above aqueous medium are used as the first fluid 1a and second fluid 2a. The dispersant solution described above is used preferably as the third fluid 3a. Favorably in this way, as will be described below, it is possible to form three-layered laminar flow in which the dispersant solution is located between streams of the organic pigment solution and the aqueous medium. However, 4 or more channels may be formed and 4 or more liquids may be joined simultaneously.

The flow rate of the pigment solution, the dispersant solution and the aqueous medium is not particularly limited, but the ratio of the flow rate of pigment solution to aqueous medium is preferably 1:1 to 1:20, and the ratio of the flow rate of the pigment solution to the dispersant solution is preferably 1:1 to 20:1.

Fig. 2 is an explanatory view conceptually illustrating an embodiment of the junction state of the first fluid 1a, the second fluid 2a, and the third fluid 3a in the microreactor 5. As shown in the Figure, when the first fluid 1a, the second fluid 2a and the third fluid 3a are fed to the junction region E, it is possible to form a laminar flow consisting of a region C mainly containing the first fluid 1 a fed from the channel L1, a region A mainly containing the second fluid 2a fed from the channel L2, and a region B mainly containing the third fluid 3a fed from the channel L3, which can be the mixed region. In this way, the components (e.g., pigment) contained in the first fluid 1a diffuse into the region B, while the components (e.g., aqueous medium) contained in the second fluid 2a into the region B. As a result, under an environment where the component (e.g., dispersant) contained in the third fluid 3a is acting effectively, the component (e.g., pigment) in the first fluid 1a and the component (e.g., aqueous medium) in second fluid 2a are brought into contact with each other, giving a product (e.g., pigment fine particles) mainly in the region B. Thus, in the present embodiment, a liquid 4a containing the product (e.g., pigment fine particles), i.e., a pigment fine particle dispersion, is obtained in the container 4.

In the production method according to the present invention, it is possible, as described above, to form a laminar flow by feeding a dispersant solution between the streams of an organic pigment solution and an aqueous medium. It is thus possible to place a dispersant in the area where crystal precipitation occurs and thus, to improve efficiency of controlling particle generation and consequently to reduce the amount of the dispersant used. The method gives smaller-sized particles and is also effective in improving the monodispersibility.

The microreactor 5 in the present embodiment is preferably a microreactor containing channel units having an equivalent diameter of 2 mm or less. The equivalent diameter of the simultaneous junction region E of the at least three liquids or the region of channel L4 downstream thereof is preferably 2 mm or less, more preferably 0.05 to 1 mm. In the microreactor 5 of the present embodiment, the equivalent diameter of the first channel L1 is not particularly limited, but preferably 0.05 to 1 mm. The equivalent diameter of the second channel L2 is preferably 0.05 to 1 mm. The equivalent diameter of the third channel L3 is preferably 0.05 to 1 mm.

Typical examples of the microreactors for use in the production method according to the present invention include a HPLC piping part "Four-way Joint" (trade name), manufactured by Tokyo Rikakikai Co., Ltd., the "microreactor 5" described in JP-A-2005-206666, the "microreactor K-M-CC-4" (trade name) described in Chem. Eng. Technol. 2005, 28, 324 and the like.

The production method according to the present invention may include a step of heating the dispersion obtained. In particular, when fine particles are formed by using a polymer dispersant, heating would be effective for reducing the viscosity and improving the dispersion stability. The heating step may be carried out properly, for example, in the channel after pigment fine particle generation, in the collected dispersion or after purification or concentration. The method of heating the particle dispersion in the channel is preferable, because the operation is simple and easy and the heating condition can be uniformized.

It is possible to convert the organic pigment fine particle dispersion into organic pigment fine particles in the paste or solid state by drying. The drying method may be a common method and is not particularly limited, and examples thereof include freeze drying, distillation under reduced pressure (evaporation), the combination thereof and the like.

The content of the organic pigment after the dispersion is converted into the solid or concentrated state is not particularly limited, but preferably 5 mass% to 90 mass%, more preferably 20 mass% to 80 mass%.

The organic pigment fine particles according to the present invention and the dispersion thereof can be used in production of a high-performance ink-jet ink. Specifically, as described above, the dispersion prepared by precipitation of organic pigment fine particles by the build-up method is preferably purified and concentrated by centrifugation and/or ultrafiltration. A water-soluble high-boiling organic solvent such as glycerols or glycols is preferably added thereto. A desired ink-jet recording ink can be prepared by adding, as needed, additives such as pH-, surface tension-, and viscosity-adjusting agents and antiseptics.

Subsequent separation, concentration and/or adjustment of liquid physical properties described above, as needed, gives a dispersion for high-performance color filters.

The paint according to the present invention containing the organic pigment fine particles and a vehicle is prepared by using the organic pigment fine particle dispersion according to the present invention and by processing in the concentration, resin addition, liquid physical properties adjustment and other steps. It is preferably used as a heat- or light-curing paint containing a resin crosslinkable by heat or light.

The present invention, which solved the problem that the kinds of the usable dispersants are restricted by their alkali resistance and solubility, expands the freedom in selecting the dispersant applied. Thus, the invention expand the kinds of the dispersants used for example in practically producing inks and paints and allows selection of the dispersant, based not only on various properties such as dispersion stability but also, for example, on cost and environmental friendliness.

The production method according to the present invention provides a dispersion containing organic pigment fine particles smaller in particle diameter and narrower in particle diameter distribution with a small amount of dispersant and allows preservation of the dispersion at low viscosity. The present invention enables expansion of the range in kind of the usable dispersants, and thus, allows use, for example, of a dispersant that is labile and easily decomposed when present with a higher-concentration alkali in the pigment solution. The ink-jet recording ink and paint prepared by using the above organic pigment fine particles superior in properties is superior in ejection efficiency and coating efficiency and give a favorable vivid brilliant color.

The present invention will be described in more detail based on the following examples, but the invention is not intended to be limited thereto.

## EXAMPLES

(Example 1)

8 g of Pigment Yellow 128 (CROMOPHTAL YELLOW 8GNP (trade name), manufactured by Ciba Specialty Chemicals), 6.3 g of 28% sodium methoxide methanol solution (manufactured by Wako Pure Chemical Industries Co., Ltd.), and 120 mL of dimethylsulfoxide were dissolved at room temperature, to give a solution I (pigment solution). The concentration of the added base in the pigment solution was calculated to be 0.27 mol/L.

3.2 g of sodium di(2-ethylhexyl) sulfoscuccinate (manufactured by Tokyo Kasei Kogyo Co. Ltd.) was dissolved in 20 mL of dimethylsulfoxide, to give a solution II (dispersant solution). Distilled water was used as solution III.

A four-way joint having an internal diameter of 0.5 mm (Model JYF-405 (trade name), manufactured by Tokyo Rikakikai Co., Ltd.) was used as the junction region. Three Teflon (registered trademark) tubes of 1 m in length and 1 mm in equivalent diameter were connected to three of the four inlets of the four-way joint, which in turn are connected to syringes respectively containing the solutions I, II and III that are connected to pumps. Another Teflon (registered trademark) tube of 1.5 m in length and 500 μm in equivalent diameter was connected to the other opening as outlet. As for the relative positional relation, the tubes were connected so that the solution II is fed through the front inlet port and the solutions I and III through the inlet ports in the direction perpendicular to the direction of the outlet port. To make the solution II flow between the streams of the solutions I and III. The solution I was fed at a feeding rate of 3.0 mL/min, the solution II at 0.5 mL/min, and the solution III at 16 mL/min. A Pigment Yellow 128 dispersion discharged out of the tip of the tube outlet was collected. The dispersion had a pH of 12.0. The Reynolds number of the fluid immediately after junction was calculated to be approximately 640.

The liquid was purified in an ultrafiltration device (UHP-62K (trade name), manufactured by Advantec Mfg, Inc., molecular cutoff: 50,000), with distilled water was added and the filtrate removed while the entire volume was kept constant, and then, concentrated to a pigment concentration of 5.0 mass%. The 5.0 mass% pigment dispersion had a viscosity of 4.7 mPa·s; the volume-average particle diameter Mv of the pigment particle in the liquid was 26.3 nm; the ratio of volume-average particle diameter Mv/number-average particle diameter Mn, an indicator of monodispersibility, was 1.33. The particle diameter (Mv) and the monodispersibility (Mv/Mn) of the pigment particle were determined by using Nanotrack UPA-EX150 (trade name) manufactured by Nikkiso Co., Ltd. at room temperature (around 25°C) after the liquid was diluted with distilled water to a pigment concentration of 0.2 mass%. The same is true for the following

Examples and Comparative Examples.

(Example 2)

A 5.0 mass% pigment dispersion was prepared in a similar manner to Example 1, except that the amount of sodium di(2-ethylhexyl) sulfoscuccinate used in Example 1 was changed to 8.0 g, the viscosity and the particle diameter were determined, and the results are shown in Table 1.

(Example 3)

Methyl methacrylate, ethyl acrylate and methacrylic acid were polymerized radically at a weight ratio of 1:2:1, to give a ternary copolymer D-1 (average molecular weight: 25,000), according to the method described in JP-A-10-81843, paragraph 0025. A 5.0 mass% pigment dispersion was prepared in a similar manner to Example 1, except that sodium di(2-ethylhexyl) sulfoscuccinate used in Example 1 was replaced with 3.2 g of the polymer dispersant D-1, the viscosity and the particle diameter were determined, and the results are shown in Table 1.

(Example 4)

A 5.0 mass% pigment dispersion was prepared in a similar manner to Example 3, except that the amount of the polymer dispersant D-1 used in Example 3 was changed to 8.0 g, the viscosity and the particle diameter were determined, and the results are shown in Table 1.

(Example 5)

A 5.0 mass% pigment dispersion was prepared in a similar manner to Example 1, except that sodium di(2-ethylhexyl) sulfoscuccinate was replaced with 3.2 g of polyvinyl pyrrolidone K30 (trade name, manufactured by Tokyo Kasei Kogyo Co., Ltd.), the viscosity and the particle diameter were determined, and the results are shown in Table 1.

(Example 6)

A 5.0 mass% pigment dispersion was prepared in a similar manner to Example 1, except that the amount of the sodium di(2-ethylhexyl) sulfoscuccinate in the solution II used in Example 1 was changed to 2.0 g and that 1.2 g of the polymer dispersant D-1 used in Example 3 was add, the viscosity and the particle diameter were determined, and the results are shown in Table 1.

(Example 7)

Only relative positional relation of the inlets of four-way joint used for introduction of the three kinds of liquid in Example 1 was altered. Specifically, tubes were connected so that the solution III was fed through the front inlet and the solutions I and II through the inlets perpendicular to the outlet and the solution III flows between the streams of solutions I and II. A 5.0 mass% pigment dispersion was prepared in a similar manner to Example 1, except the relative position described above, the viscosity and the particle diameter were determined, and the results are shown in Table 1.

(Example 8)

Only relative positional relation of the inlets of four-way joint used for introduction of the three kinds of liquid in Example 3 was altered. Specifically, tubes were connected so that the solution III was fed through the front inlet and the solutions I and II through the inlets perpendicular to the outlet and the solution III flows between the streams of solutions I and II. A 5.0 mass% pigment dispersion was prepared in a similar manner to Example 3, except the relative position described above, the viscosity and the particle diameter were determined, and the results are shown in Table 1.

(Example 9)

In Example 3, the pigment fine particle dispersion obtained form the outlet of the downstream reactor was subjected to processing by heating in the channel. Specifically, a Teflon (registered trademark) tube having a length of 1.5 m and an equivalent diameter of 500 $\mu$m was connected to the outlet of the connector, a stainless steel tube having a length of 2 m and an equivalent diameter of 1.6 mm was connected additionally thereto via a connector, and another Teflon (registered trademark) tube having a length of 10 m and an equivalent diameter of 2 mm was connected thereto

additionally. A temperature sensor for measurement of liquid temperature was connected to the connection region between the stainless steel tube and the Teflon (registered trademark) tube having an equivalent diameter of 2 mm. The three kinds of liquids were supplied at the speeds similar to those in Example 3, while the stainless steel tube and a 6-m length of the Teflon (registered trademark) tube having an equivalent diameter of 2 mm connected thereto were immersed in an oil bath kept at a temperature of 80°C. The liquid temperature, as determined by the sensor installed at the edge of the stainless steel tube, was almost constant at 78 to 80°C, indicating that heat exchange was complete in the stainless steel tube. A dispersion of Pigment Yellow 128 discharged from the outlet of the Teflon (registered trademark) tube outlet was collected. The liquid heating period was calculated to be approximately 400 seconds.

(Comparative example 1)

The solutions I and II used in Example 1 was mixed, to give a pigment solution, and then the solution and an aqueous medium were mixed, to give a PY-128 fine particle dispersion. Specifically, 8 g of Pigment Yellow 128, 6.3 g of 28% sodium methoxide methanol solution and 3.2 g of sodium di(2-ethylhexyl) sulfoscuccinate were dissolved in 140 mL of dimethylsulfoxide, to give a solution designated as solution IA. The concentration of the added base in the pigment solution was calculated to be 0.23 mol/L.

The four-way joint used in Example 1 was replaced with a Y-shaped three-way joint having an internal diameter of 0.5 mm (manufactured by Tokyo Rikakikai Co., Ltd., model JYF-305 (trade name)) and Teflon (registered trademark) tubes having a length of 1 m and an equivalent diameter of 1 mm were connected via connectors to two of the three inlets, and syringes respectively containing the solution IA and distilled water (solution III) were connected thereto and also to pumps. A Teflon (registered trademark) tube having a length of 1.5 m and an equivalent diameter of 500 μm was connected to another opening and used as the outlet. The solutions IA and III were supplied respectively at flow rates of 3.5 mL/min and 16 mL/min. The dispersion obtained was processed similarly to Example 1, to give a 5.0 mass% pigment dispersion, the viscosity and the particle diameter were determined, and the results are shown in Table 1. The dispersion had a pH of 12.5 then. In the present experiment, it took two hours from preparation to supply of the solution IA, and the solution was fed continuously for 35 minutes.

(Comparative example 2)

A 5.0 mass% pigment dispersion was prepared in a similar manner to Comparative example 1, except sodium di(2-ethylhexyl) sulfoscuccinate used in Comparative Example 1 was replaced with the polymer dispersant D-1 in the same amount, the viscosity and the particle diameter were determined, and the results are shown in Table 1. It took two hours from preparation to supply of the solution IA, and the solution was fed continuously for 35 minutes.

(Comparative example 3)

A 5.0 mass% pigment dispersion was prepared in a similar manner to Comparative example 2, except that the amount of the polymer dispersant D-1 used in Comparative example 2 was changed to 8.0 g, the viscosity and the particle diameter were determined, and the results are shown in Table 1.

Table 1

| | Viscosity of 5.0 mass% dispersion (mPa·s) | Average particle diameter (Mv) | Mv/Mn |
|---|---|---|---|
| | | Initial value | Initial value |
| Example 1 | 4.7 | 26.3 | 1.33 |
| Example 2 | 8.7 | 26.1 | 1.32 |
| Example 3 | 7.2 | 26.4 | 1.37 |
| Example 4 | 14.5 | 27.3 | 1.41 |
| Example 5 | 8.4 | 27.1 | 1.39 |
| Example 6 | 4.9 | 26.9 | 1.36 |
| Example 7 | 4.9 | 39.4 | 1.40 |
| Example 8 | 6.8 | 41.1 | 1.43 |
| Example 9 | 4.9 | 26.5 | 1.38 |

(continued)

| | Viscosity of 5.0 mass% dispersion (mPa·s) | Average particle diameter (Mv) | Mv/Mn |
|---|---|---|---|
| | | Initial value | Initial value |
| Comparative example 1 | 4.8 | 75.4 | 1.78 |
| Comparative example 2 | 7.3 | 66.6 | 1.88 |
| Comparative example 3 | 12.8 | 58.5 | 1.62 |

As obvious from the results shown in Table 1, the dispersions according to the present invention obtained in Examples were lower in viscosity and the pigment fine particles contained therein had smaller particle diameter more narrowly distributed in particle diameter, compared to the pigment dispersions obtained in Comparative Examples (compare Comparative Example 1 with Examples 1 and 7, and also Comparative Example 2 with Examples 3 and 8). It is also obvious that presence of the intervening flow of the dispersant solution (solution II) is effective in giving particles having smaller particle diameter (compare Examples 1 with 7, and also Examples 3 with 8). It was also found that it was possible to obtain a favorable pigment fine particle dispersibility even when the amount of the dispersant was reduced in the present invention (see Example 6). Further, in the present invention, heat treatment during preparation of the dispersion was found to be effective in reducing the viscosity (compare Examples 3 with 9). The dispersion of Example 4 was more viscous because the amount of the polymer dispersant was raised, but the pigment particles prepared even under such a condition was superior in fineness (compare Example 4 with Comparative Example 3).

(Example 10)

The components used for the solution I used in Example 1 were changed to 8 g of a pigment 2,9-dimethyl quinacridone (manufactured by Clariant, HOSTAPERM PINK E (trade name)), 18.1 g of 28% sodium methoxide methanol solution (manufactured by Wako Pure Chemical Industries Co., Ltd.), and 120 mL of dimethylsulfoxide. A 5.0 mass% pigment dispersion was prepared in a similar manner to Example 1, except the composition above, and the viscosity and the particle diameter were determined, and the results are shown in Table 2. The dispersion obtained had a pH of 12.6.

(Example 11)

A 5.0 mass% pigment dispersion was prepared in a similar manner to Example 10, except that sodium di(2-ethylhexyl) sulfoscuccinate added to the solution II in Example 10 was replaced with the polymer dispersant D-1 in the same amount, the viscosity and the particle diameter were determined, and the results are shown in Table 2.

(Example 12)

Only relative positional relation of the inlets of four-way joint used for introduction of the three kinds of liquid in Example 10 was altered. A 5.0 mass% pigment dispersion was prepared in a similar manner to Example 10, except that tubes were connected so that the solution III was fed through the front inlet and the solutions I and II through the inlets perpendicular to the outlet, the viscosity and the particle diameter were determined, and the results are shown in Table 2.

(Example 13)

Only relative positional relation of the inlets of four-way joint used for introduction of the three kinds of liquid in Example 11 was altered. Specifically, tubes were connected so that the solution III was fed through the front inlet and the solutions I and II through the inlets perpendicular to the outlet and the solution III flows between the streams of solutions I and II. A 5.0 mass% pigment dispersion was prepared in a similar manner to Example 11, except the relative position above, the viscosity and the particle diameter were determined, and the results are shown in Table 2.

(Comparative example 4)

The solutions I and II used in Example 10 was mixed, to give a pigment solution, and then the solution and an aqueous medium were mixed, to give a 2,9-dimethyl quinacridone fine particle dispersion. Specifically, 8 g of 2,9-dimethyl quinacridone, 18.1 g of 28% sodium methoxide methanol solution and 3.2 g of sodium di(2-ethylhexyl) sulfosuccinate were dissolved in 140 mL of dimethylsulfoxide at room temperature, to give a solution designated as solution IB. The concentration of the added base in the pigment solution was calculated to be 0.67 mol/L.

The solution IB and distilled water (solution III) were supplied at flow rates respectively of 3.5 mL/min and 16 mL/min. The dispersion obtained was processed similarly, to give a 5.0 mass% pigment dispersion, the viscosity and the particle diameter were determined, and the results are shown in Table 2. The dispersion obtained had a pH of 12.7. It took two hours from preparation to supply of the solution IB, and the solution was fed continuously for 35 minutes.

(Comparative example 5)

A 5.0 mass% pigment dispersion was prepared in a similar manner to Comparative example 4, except that sodium di(2-ethylhexyl) sulfoscuccinate used in Comparative example 4 was replaced with the polymer dispersant D-1 in the same amount, the viscosity and the particle diameter were determined, and the results are shown in Table 2. It took two hours from preparation to supply of the solution IB, and the solution was fed continuously for 35 minutes.

Table 2

| | Viscosity of 5.0 mass% dispersion (mPa·s) | Average particle diameter (Mv) | Mv/Mn |
|---|---|---|---|
| | | Initial value | Initial value |
| Example 10 | 4.9 | 25.8 | 1.35 |
| Example 11 | 7.7 | 26.2 | 1.33 |
| Example 12 | 4.8 | 38.4 | 1.46 |
| Example 13 | 7.1 | 39.0 | 1.44 |
| Comparative example 4 | 4.7 | 67.2 | 2.01 |
| Comparative example 5 | 7.6 | 62.9 | 1.72 |

As obvious from the results shown in Table 2, the present invention has a favorable operational advantage that it is possible to obtain pigment fine particles extremely smaller and uniform in particle diameter, while preserving low viscosity of the dispersion even when a different pigment species (PY-122) is used (compare Examples 10 and 12 with Comparative Example 4, and also Examples 11 and 13 with Comparative Example 5). It is also obvious that presence of the intervening flow of the dispersant solution (solution II) is effective in giving particles having smaller particle diameter (compare Examples 10 with 12, and also Examples 11 with 13).

(Example 14) Preparation of ink-jet ink

An ink-jet ink in the following composition was prepared by using the 5% concentration dispersion described in Example 9 after heat-treatment, purification by ultrafiltration, and concentration.
Organic pigment (3.5 mass%)
Olefin E1010 (2.0 mass%)
Glycerol (10 mass%)
Water (84.5 mass%)
In an ink ejection test as the ink of PM-D600 (trade name) manufactured by Seiko Epson Corp., the ink-jet ink prepared gave favorable printed images without clogging of the nozzle.

(Example 15) Preparation of paint

A paint was prepared by mixing the 5% concentration dispersion described in Example 9 after heat-treatment, purification by ultrafiltration, and concentration with a resin at the following rate.
Organic pigment (5%): Julimer ET-410 (trade name, manufactured by Nihon Junyaku Co., Ltd., 30%) = 2:1
The paint was spotted dropwise on a glass plate with a dropping pipette and dried under heat at 40°C for 2 hours, to give a transparent brilliant coated film.
Having described our invention as related to the present embodiments, it is our intention that the invention not be limited by any of the details of the description, unless otherwise specified, but rather be construed broadly within its spirit and scope as set out in the accompanying claims.
This application claims priority on Patent Application No. 2008-084862 filed in Japan on March 27, 2008, which is entirely herein incorporated by reference.

**Claims**

1. A method of producing an organic pigment fine particle dispersion, including feeding at least three liquids, which are a solution containing an organic pigment dissolved in an organic solvent in the presence of an alkali, a solution containing a dispersant, and an aqueous medium, into separate channels and bringing the at least three liquids into junction with each other in a channel simultaneously to produce fine particles of the organic pigment.

2. The production method according to Claim 1, wherein the solution containing the dispersant is a solution of the dispersant dissolved in a medium containing an organic solvent as the main component.

3. The production method according to Claim 1 or 2, wherein the laminar flow is formed after simultaneous junction of the at least three liquids, while the solution containing the dispersant is supplied between the streams of the organic pigment solution and the aqueous medium.

4. The production method according to any one of Claims 1 to 3, wherein the mass of the dispersant in the dispersion is adjusted to 0.5 times or less of the mass of the organic pigment.

5. The production method according to any one of Claims 1 to 4, wherein the simultaneous junction of the at least three liquids occurs in a microreactor apparatus containing channel units having an equivalent diameter of 2 mm or less.

6. The production method according to any one of Claims 1 to 5, wherein the equivalent diameter of the channel in the region of the simultaneous junction of the at least three liquids or the downstream thereof is 2 mm or less.

7. The production method according to any one of Claims 1 to 6, wherein the dispersant used is one or more ester group-containing compounds.

8. The production method according to any one of Claims 1 to 7, wherein the dispersant used is one or more surfactants.

9. The production method according to any one of Claims 1 to 8, wherein the volume average particle diameter (Mv) of the organic fine particles is from 10 nm to 50 nm.

10. An ink-jet recording ink, including the organic pigment fine particles in an aqueous dispersion obtained by the production method according to any one of Claims 1 to 9, the dispersant, and an ink medium.

11. A paint, including the organic pigment fine particles in an aqueous dispersion obtained by the production method according to any one of Claims 1 to 9, the dispersant, and a vehicle.

*Fig. 1*

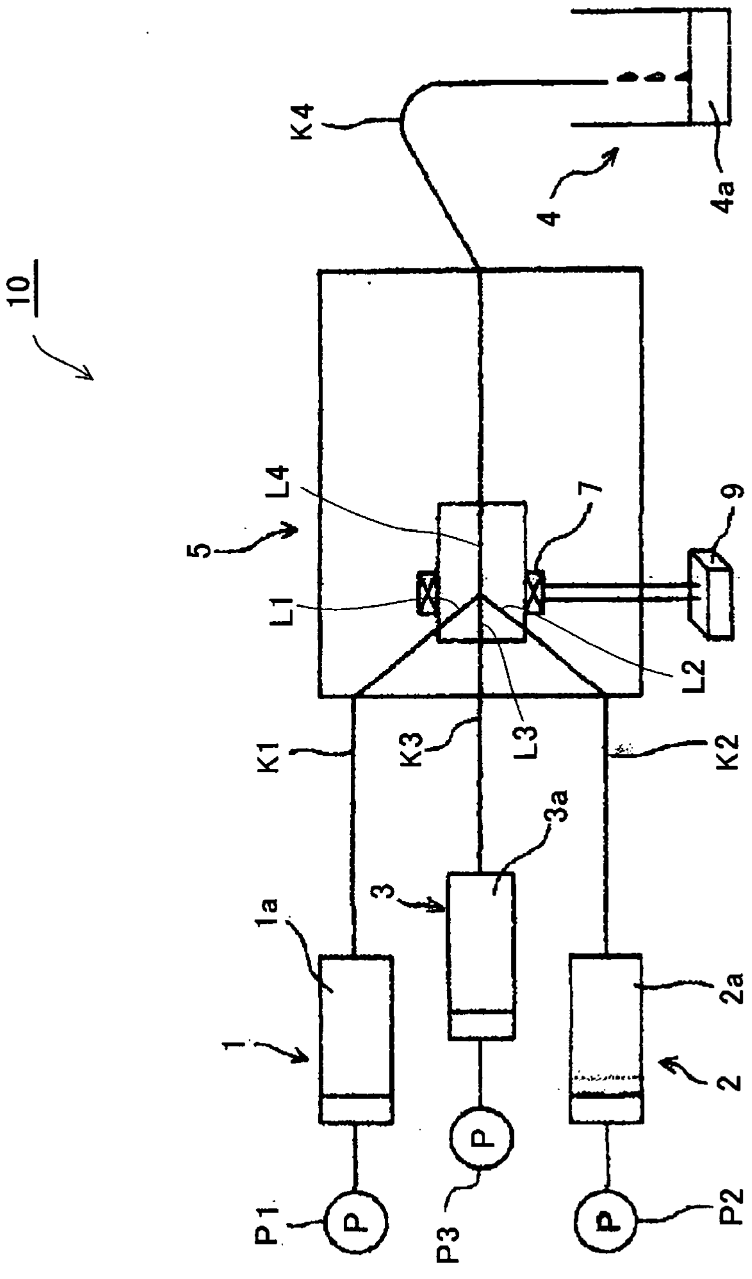

Fig. 2

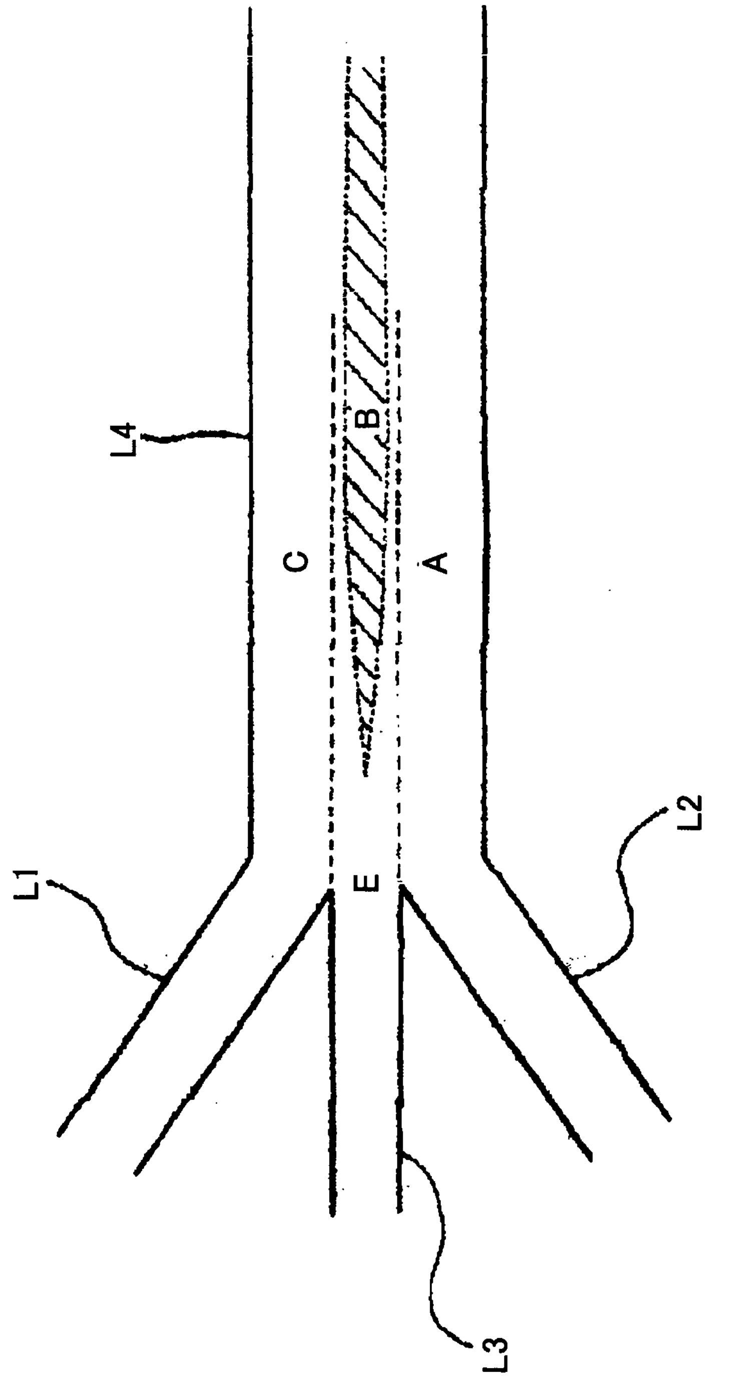

Europäisches Patentamt
European Patent Office
Office européen des brevets

# EUROPEAN SEARCH REPORT

Application Number
EP 09 00 4488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/057485 A1 (TESHIMA TAKAYUKI [JP] ET AL) 16 March 2006 (2006-03-16) | 1-11 | INV. C09B67/10 C09B67/20 |
| A | * paragraph [0055]; claims 1,11; figure 3 * | 1-11 | |
| X | US 2007/012221 A1 (MAETA HIDEKI [JP] ET AL) 18 January 2007 (2007-01-18) | 10,11 | |
| X | * paragraphs [0002], [0137]; claims 1,2,5,15; examples * | 10,11 | |
| A | * paragraph [0117]; claims 1,2,7,10 * | 1-9 | |
| A | US 2006/090697 A1 (TESHIMA TAKAYUKI [JP] ET AL) 4 May 2006 (2006-05-04) | 1-11 | |
| A | * paragraph [0049] - paragraph [0050]; claims 1,2,9 * | 1-11 | |
| X | EP 1 195 413 A (CLARIANT GMBH [DE]) 10 April 2002 (2002-04-10) | 10,11 | |
| X | * example 1a * | 10,11 | |
| A | * paragraph [0022]; claim 1 * | 1-9 | |
| A | JP 2007 191700 A (CANON KK) 2 August 2007 (2007-08-02) | 1-11 | TECHNICAL FIELDS SEARCHED (IPC) |
| A | * figure 5; example 4 * | 1-11 | C09B |

The present search report has been drawn up for all claims

| Place of search | Date of completion of the search | Examiner |
|---|---|---|
| Munich | 18 May 2009 | Mader, Margarita |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 00 4488

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2009

| Patent document cited in search report | Publication date | Patent family member(s) | Publication date |
|---|---|---|---|
| US 2006057485 A1 | 16-03-2006 | NONE | |
| US 2007012221 A1 | 18-01-2007 | JP 2007039643 A | 15-02-2007 |
| US 2006090697 A1 | 04-05-2006 | JP 2006124556 A | 18-05-2006 |
| EP 1195413 A | 10-04-2002 | DE 10049201 A1 | 11-04-2002 |
| | | JP 2002155221 A | 28-05-2002 |
| | | KR 20020027234 A | 13-04-2002 |
| | | US 2002040665 A1 | 11-04-2002 |
| JP 2007191700 A | 02-08-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61255964 A
- JP 2003113341 A
- JP 2004043776 A
- JP 2007039643 A
- WO 2007013599 A
- JP 2005206666 A
- JP 10081843 A
- JP 2008084862 A


### Non-patent literature cited in the description


- Dispersion Stabilization of Pigment and Surface Treatment Technique/Evaluation. Technical Information Institute Co., Ltd, 2001, 29-46
- Biryushi Funtai no Saisentan Gijutsu. Hanno Nyukazai wo Mochiiru Biryushi Sekkei. CMC Publishing Co., Ltd, 2000, 23-31
- *Chem. Eng. Technol.,* 2005, vol. 28, 324